# EUROPÄISCHE PATENTSCHRIFT

(11) **EP 1 518 426 B1**
(45) Veröffentlichungstag und Bekanntmachung des Hinweises auf die Patenterteilung: **21.12.2005**
(21) Anmeldenummer: 03761436.9
(22) Anmeldetag: 26.06.2003
(51) Int. Cl.: H04Q 7/22

(54) **VERFAHREN UND ANORDNUNG ZUR BEHANDLUNG VON KURZNACHRICHTEN BEI RUFNUMMERNPORTABILITÄT**
METHOD AND ARRANGEMENT FOR THE TREATMENT OF SHORT MESSAGES WITH DIRECTORY NUMBER PORTABILITY
PROCEDE ET DISPOSITIF POUR TRAITER DES MESSAGES COURTS EN CAS DE CONSERVATION DU NUMERO D'APPEL

(30) Priorität: 28.06.2002 DE 10229208; 27.01.2003 DE 10303161
(43) Veröffentlichungstag der Anmeldung: 30.03.2005
(73) Patentinhaber: T-Mobile Deutschland GmbH, 53227 Bonn (DE)
(72) Erfinder: KLOCKNER, Hanns-Peter, 64293 Darmstadt (DE)
(74) Vertreter: Riebling, Peter
(86) Internationale Anmeldenummer: PCT/DE2003/002136
(87) Internationale Veröffentlichungsnummer: WO 2004/004382

(56) Entgegenhaltungen:
- WO-A-00/38458
- "ETSI EN 301 716 V7.3.1;Digital cellular telecommunications system (Phase 2+); Support of Mobile Number Portability (MNP); Technical Realisation; Stage 2 (GSM 03.66 Version 7.3.1. Release 1998)" ETSI EN 301 716 V7.3.1, XX, XX, Oktober 2000 (2000-10), Seiten 1-71, XP002237024 in der Anmeldung erwähnt
- ETSI: "DIGITAL CELLULAR TELECOMMUNICATIONS SYSTEM (PHASE 2+);TECHNICAL REALIZATION OF THE SHORT MESSAGE SERVICE (SMS); (GSM 03.40 Version 7.4.0 Release 1998)" ETSI TI 100 901 V7.4.0, XX, XX, Dezember 1999 (1999-12), Seiten 1-121, XP002160590

## Beschreibung

Die Erfindung betrifft ein Verfahren und eine Anordnung zur Behandlung von Kurznachrichten bei Rufnummernportabilität in Mobilkommunikationssystemen.
Kurznachrichten (SM) im Sinne dieser Erfindung beschränken sich nicht auf SMS (Short Message Service) und/oder MMS (Multimedia Messaging Service).

Die von der Regulierungsbehörde für Telekommunikation und Post (RegTP) in Deutschland angeordnete Einführung der Rufnummernportabilität im Mobilfunk, auch bezeichnet als MobileNumberPortability (MNP), welche auch den Short Message Service betrifft, ist prinzipiell in der ETSI EN 301 716 (GSM 03.66) beschrieben. Aufgrund der Erkenntnisse aus dem betrieblichen Geschehen ist bekannt, dass im Regelfall mehrere Versuche erforderlich sind, eine MT-SM (Mobile Terminated Short Message), d.h. eine an ein mobiles Endgerät gerichtete Kurznachricht (SM), zuzustellen. Hierfür sind sogenannte Retries erforderlich, die im Prinzip genauso ablaufen wie ein erster Zustellversuch für eine MT-SM. Die GSM 03.66 beschreibt jedoch grundsätzlich nur den ersten Zustellversuch, nicht dagegen die darüber hinaus praktisch immer erforderlichen Retries. Aufgrund der Tatsache, dass mit Einführung der MNP die Internationale Mobilfunkteilnehmer-Rufnummer (MSISDN) eines Empfängers einer MT-SM nichts über das (momentane) Subskriptions-Mobilfunknetz (Subscription Network) aussagt, da der Teilnehmer die MSISDN in anderes Mobilfunknetz (PLMN) mitnehmen kann, muss das abfragende Mobilfunknetz (Interrogating Network) immer zuerst das Subscription-Network nach den Teilnehmerdaten abfragen. Vor der Auslieferung einer in einer SMS Zentrale (SMSC) wartenden SM muss diese daher von einem Heimatregister (HLR) aus dem Subsciption-Network die Adresse der "visited MSC", d.h. der Vermittlungsstelle des vom Empfänger aktuell verwendeten Mobilfunknetzes, und die Internationale Mobilteilnehmerkennung (IMSI) des Empfängers holen. Dies geschieht über verschiedene Verfahren, die mehr oder weniger aufwändig sind, letztendlich aber zu der gewünschten Information führen, so diese überhaupt erhältlich ist. Die absendende Entity, welches das HLR im Subscription-Network des Empfängers ist, sendet als Absender seine Calling-Party-Adresse (CgPty-Adresse) mit. Diese wird bei allen derzeit bekannten Verfahren jedoch nach jedem Auslieferungsversuch der SM verworfen. Für jeden weiteren Retry muss das SMSC daher das gesuchte HLR immer wieder über ein sogenanntes MNP-SRF Netzelement (Mobile Number Portability Signaling Relay Function)ansteuern, selbst dann, wenn sich das HLR im eigenen PLMN befindet. Dieses Verfahren wird heute, ohne MNP, so praktiziert und ist für MNP grundsätzlich so übernommen worden, was zu der beschriebenen Ineffizienz führt.

Es ist daher die Aufgabe der Erfindung, ein Verfahren zur Behandlung von Kurznachrichten bei Rufnummernportabilität im Mobilfunk anzugeben, das die Last in den beteiligen Netzelementen reduziert und die Zustellung der Kurznachrichten beschleunigt. Eine Anordnung zur Durchführung des Verfahrens soll ebenfalls angegeben werden.

Die Lösung der Aufgabe erfolgt erfindungsgemäß durch die Merkmale der unabhängigen Patentansprüche.

Vorteilhafte Ausgestaltungen und Weiterbildungen der Erfindung sind in den abhängigen Patentansprüchen beschrieben.

In einem Ausführungsbeispiel wird das SMSC technisch so konzipiert, dass es sich die CgPty-Addresse des bei einem ersten Zustellversuch gefundenen HLRs merkt und diese Information parallel zur wartenden SM speichert. Bei jedem künftig erforderlichen Retry erhält das SMSC die zur zustellenden SM notwendigen Zieladresse des abzufragenden HLRs ohne Zeitverzug intern mitgeliefert und kann sodann direkt über den SS7-Weg von dem richtigen HLR die Send_Routing_Information_For_SM abfragen.
Hierfür ist nur die Einführung eines neuen Feldes im Speicher der SMSC für wartende SM sowie die Rechenvorschrift zur Übertragung der CgPty-Addresse des HLR in dieses Feld erforderlich. Diese Information kann entweder aus dem SCCP- oder MAP-Teil der SRI_for_SM_response des abgefragten HLRs gewonnen werden.

Das beschriebene Verfahren reduziert deutlich die Last des MNP-SRF als zentrale Einrichtung für das Routing und beschleunigt darüber hinaus den Zustellversuch, da keine Performance im SMSC für das IMSI-Prefixing oder interne Tabellenabfragen benötigt wird und somit direkt zum HLR geroutet werden kann.
Betrieblich ergeben sich erhebliche Vorteile, da keine zusätzlichen Tabellen im SMSC gepflegt werden müssen. Diese wären erforderlich, um bei flexible routing (IMSI-MSISDN-Entkopplung) mehrere hundert zusätzliche Einträge ins SMSC einzubringen und zu pflegen.
Darüber hinaus lässt sich das Verfahren weltweit von den Herstellern der SMSC einsetzen, da MNP grundsätzlich überall nach derselben Methode betrieben wird, wenn die GSM 03.66 als Vorbild dient.
Die Sicherheit des Systems wird darüber hinaus auch erhöht, da der eingesparte Verkehr nicht mehr über den MNP-SRF als Engpass laufen muss.
Dieses Verfahren kann auch international eingesetzt werden und damit Kosten ersparen, da es grundsätzlich herstellerunabhängig einsetzbar ist (alle SMSC arbeiten nach dem store-and-forward-Prinzip).
Verfügt ein GSM-Netz z.B. über eine SMSC-Kapazität von ca. 1000 SM/s und müssen die SMSC täglich ca. 20 Mio. SM verarbeiten, so lässt sich die Ersparnis bei den Suchanfragen an den/die MNP-SRF mit bis zu 50% , d.h. ca. 10 Mio. weniger pro Tag, berechnen.
Diese Minderbelastung erbringt folgende Vorteile im SS7-Netz:
- Zeitersparnis beim Verbindungsaufbau der Retries;
- Geringerer Durchsatz bei dem/den MNP-SRF, gleichzusetzen mit Ersparnissen beim Erwerb von Lizenzen;
- Weniger SS7-Links;
- Geringerer Pflegeaufwand in den SMSC; und
- Zukunftssichere Planung weiterer HLR für mehr Verkehr.

Die SMSC hält im sogenannten Short Message Handler (SMH), einem bestimmten Speicherbereich der SMSC, alle wartenden SM (store and forward-Prinzip) gespeichert. Im Falle von MT-SM muss vor deren Zustellung die IMSI und die Visited MSC (VMSC) herausgefunden werden. Dies geschieht durch die MAP_Send_Routing_Information_For_SM - Abfrage. Das dadurch erhaltene Ergebnis benötigt die SMSC, um die MT-SM zustellen zu können. Da dies im Regelfall nicht beim ersten Male gelingt, muss die SMSC nach einem bestimmten Retry-Schema dies immer wieder wiederholen, bis entweder die vorgesehene Speicherdauer überschritten worden ist oder bis die MT-SM erfolgreich zugestellt wurde. Der benötigte und bereits vorhandene Speicher muss für dieses Beispiel um ein 10 Byte breites Feld erweitert werden (max. Länge des Calling Adress Signals, HLR-GT, im Extremfall). Für alle betroffenen MT-SM soll die SMSC in dieses Zusatz-Feld die Absenderadresse (CgPty-Addresse) des antwortenden HLRs eintragen. Damit liegt für jede noch nicht erfolgreich zugestellte MT-SM sogleich die Zielinformation für die nächste Abfrage vor. Wird die MT-SM schon beim ersten Zustellversuch erfolgreich ausgeliefert, wird die SM einschließlich dieser Information gelöscht.
Die sonstige Infrastruktur in Mobilfunknetzen wird durch diese Erfindung nicht tangiert.

Ein Ausführungsbeispiel der Erfindung wird nachfolgend anhand der Zeichnungsfigur näher beschrieben. Dabei ergeben sich weitere Merkmale, Vorteile und Anwendungsmöglichkeiten der Erfindung.

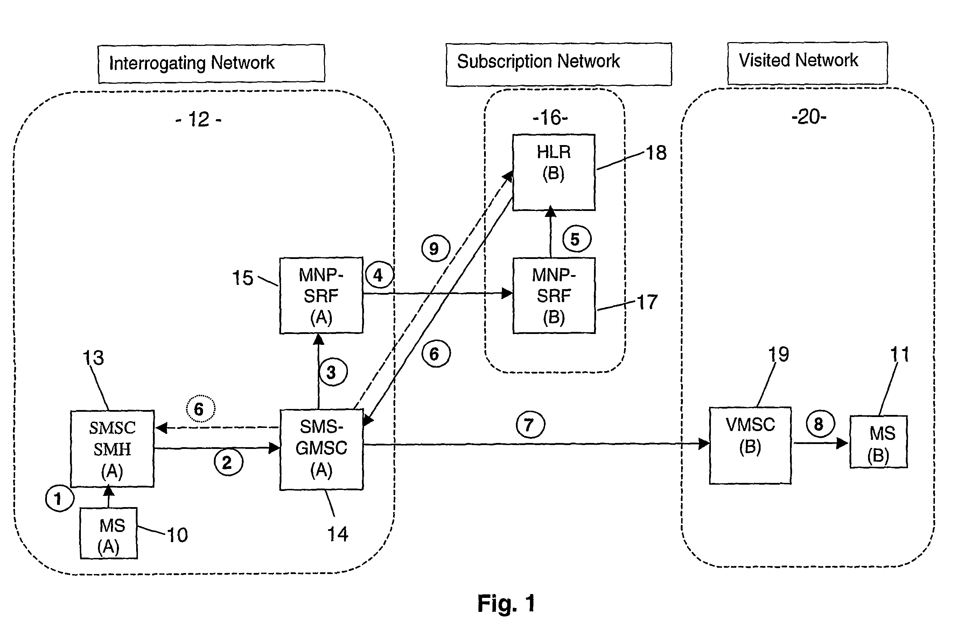

Figur 1 zeigt schematisch die Verfahrensschritte für die Zustellung einer Kurznachricht zu einer portierten Rufnummer, wobei das abfragende Netzwerk ein direktes Routing unterstützt.

Ein Mobilfunkteilnehmer 10 möchte eine Kurznachricht zu einem anderen Mobilfunkteilnehmer 11 senden. Teilnehmer 10 ist beim abfragenden Netzwerk 12 eingebucht. Die Kurznachricht wird von einer SMS Zentrale SMSC 13 des Netzwerks 12 empfangen und dort temporär in einem Speicherbereich des sogenannten Short Message Handlers (SMH) zwischengespeichert (Schritt 1). Das SMSC 13 übergibt die Kurznachricht an eine SMS-Übergangsvermittlungsstelle 14 (Schritt 2). Die SMS-GMSC 14 erzeugt eine Routingabfrage für die Zustellung der Kurznachricht. Hierbei wird eine MAP_Send_Routing_Information_For_SM - Nachricht an die MNP-SRF Funktion 15 des Netzwerks 12 gesendet (Schritt 3). Diese Nachricht enthält als Called-Party-Adresse (CdPty-Adresse) die MSISDN des angerufenen Teilnehmers 11, und als CgPty-Adresse die Adresse des SMS-GMSC 14.
Sobald die MNP-SRF 15 die Nachricht empfängt, wird eine MNP-SRF Operation getriggert. Die MNP-SRF Funktionalität 15 analysiert die MSISDN in der CdPty-Adresse und stellt fest, dass die MSISDN portiert wurde. Diese Feststellung kann in bekannter Weise durch Abfrage einer Nummern-Portabilitäts-Datenbasis (nicht dargestellt) erfolgen. Mit den Angaben aus der NP Datenbasis wird die CdPty-Adresse modifiziert und enthält nun eine Routingnummer (RN) oder eine Kombination von Routingnummer und MSISDN des angerufenen Teilnehmers 11. Die Routingnummer zeigt auf das Subskriptions-Netzwerk 16 des gerufenen Teilnehmers 11.
Die MAP_Send_Routing_Information_For_SM - Nachricht mit der modifizierten CdPty-Adresse wird von der MNP-SRF Funktion 15 des Netzwerks 12 an die MNP-SRF Funktion 17 des Subskriptions-Netzwerks 16 gesendet (Schritt 4).
Nachdem die MNP-SRF 17 des Netzwerks 16 die Nachricht empfangen hat, wird wiederum eine MNP-SRF Operation getriggert. Die MNP-SRF Funktionalität 17 analysiert die MSISDN in der CdPty-Adresse und stellt anhand einer Abfrage der NP Datenbasis fest, dass die MSISDN portiert wurde. Mit den Angaben aus der NP Datenbasis wird die CdPty-Adresse modifiziert und enthält nun die Adresse des zuständigen Heimatregisters 18 (HLR) des Teilnehmers 11.

Die MAP_Send_Routing_Information_For_SM - Nachricht mit der modifizierten CdPty-Adresse wird zum zuständigen HLR 18 geroutet (Schritt 5).
Das HLR 18 antwortet auf die Routinganfrage mit Rücksendung einer MAP_Send_Routing_Information_For_SM Acknowledge - Nachricht an das MSM-GMSC 14, Diese Nachricht enthält die IMSI sowie im Regelfall die Adresse der für den gerufenen Teilnehmer zuständigen Vermittlungsstelle 19 (VMSC), die Teil des besuchten (Visited) Netzwerks 20 ist, in welchem sich der Teilnehmer eingebucht ist, und andererseits als CgPty-Adresse die HLR-Adresse des HLR 18(Schritt 6).
Erfindungsgemäß wird die dem SMS-GMSC 14 übergebene HLR-Adresse ebenfalls an das SMSC 13 übermittelt, dort der zuzustellenden Kurznachricht zugeordnet und im Short Message Handler gespeichert.

Die SMS-GMSC 14 versucht nun die Kurznachricht mittels einer Forward_SMS Nachricht und der VMSC Adresse dem VMSC 19 zuzustellen (Schritt 7), von wo sie an den Teilnehmer 11 weitergeleitet wird (Schritt 8). Ist der Zustellversuch erfolgreich, so wird die Kurznachricht und die zugehörige HLR-Adresse im SMSC 13 aus dem Speicher des SMH gelöscht.
Ist der Zustellversuch nicht erfolgreich, so wird er nach einer gewissen Zeit wiederholt (Retry).
Bei jedem künftig erforderlichen Retry kann das SMSC 13 die Kurznachricht und entsprechende Zieladresse (HLR-Adresse) des abzufragenden HLR 18 ohne Zeitverzug direkt aus dem SMH entnehmen und an das SMS-GMSC 14 übergeben. Dieses kann sodann direkt über den SS7-Weg vom dem zuständigen HLR 18 die Send_Routing_Information_For_SM abfragen (Schritte 2, 9 und 6) und einen Zustellversuch starten. Bei jedem erneuten Zustellversuch entfallen daher die bisher notwendigen Zustellschritte 3, 4, und 5.

## Patentansprüche

1. Verfahren zur Behandlung von Kurznachrichten bei Rufnummernportabilität zwischen mehreren Telekommunikationsnetzen (12; 16; 20), wobei die Teilnehmerrufnummern keine eindeutige Zuordnung der Teilnehmer zu dem einzelnen Telekommunikationsnetz zulassen, und bei der Zustellung der Kurznachrichten mehrere Zustellversuche möglich sind, wobei bei dem ersten Zustellversuch die zur Zustellung der Kurznachricht erforderlichen Parameter oder Daten mit zumindest Zielinformationen ermittelt werden,
**dadurch gekennzeichnet,**
**dass** alle oder Teile der für den ersten Zustellversuch verwendeten Parameter oder Daten mit zumindest den Zielinformationen zusammen mit der zuzustellenden Kurznachricht in einer beteiligten SMS-Zentrale SMSC (13) abgespeichert werden und bei nachfolgenden weiteren Zustellversuchen zumindest teilweise wieder verwendet werden.

2. Verfahren nach Anspruch 1, **dadurch gekennzeichnet, dass** in der beteiligten SMS-Zentrale SMSC (13) die zuzustellende Kurznachricht zusammen mit einer beim ersten Zustellversuch ermittelten HLR-Adresse eines die notwendigen Zielinformationen enthaltenden Heimatregisters HLR (18) temporär gespeichert wird.

3. verfahren nach Anspruch 2, **dadurch gekennzeichnet dass** für nachfolgende weitere Zustellversuche die im HLR (18) enthaltenen Zielinformationen anhand der in der SMSC (13) gespeicherten HLR-Adresse direkt vom HLR (18) abfragt werden.

4. Verfahren nach Anspruch 3, **dadurch gekennzeichnet, dass** die Abfrage des HLR (1.8) über eine SS7- Signalisierung erfolgt.

5. Anordnung zur Bearbeitung von Kurznachrichten bei Rufnummernportabilität zwischen mehreren Telekommunikationsnetzen (12; 16; 20), wobei die Teilnehmerrufnummern keine eindeutige Zuordnung der Teilnehmer zu dem einzelnen Telekommunikationetz zulassen und wobei bei der Zustellung der Kurznachrichten mehrere Zustellversuche möglich sind, mit Mitteln zur Ermittlung von zur Zustellung der Kurznachricht erforderlichen Parametern oder Daten mit zumindest Zielinformationen bei dem ersten Zustellversuch
**gekennzeichnet durch**
einen Speicher oder Speicherteil in einer beteiligten SMS Zentrale SMSC (14) zur Aufnahme von allen oder Teilen der zu dem ersten Zustellversuch-gehörenden Parametern oder Daten mit zumindest den Zielinformationen, der einem Zwischenspeicher für die Aufnahme der zuzustellenden Kurznachricht zugeordnet ist, wobei die gespeicherten Parameter oder Daten mit zumindest den Zielinformationen bei nachfolgenden weiteren Zustellversuchen Zumindest teilweise wieder verwendet werden.

## Claims

1. Method for handling short messages when there is call number portability among a plurality of telecommunications networks (12; 16; 20), wherein the subscriber numbers allow no unique assignment of subscribers to an individual telecommunications network and in the delivery of the short messages a plurality of delivery attempts is possible, wherein in the first delivery attempt the parameters or data containing at least destination information needed for delivery of the short message are determined, **characterised in that** all or parts of the parameters or data containing at least destination information used for the first delivery attempt together with the short message to be delivered are stored in a participating SMS centre SMSC (13) and are used again at least in part in subsequent further delivery attempts.

2. Method according to claim 1, **characterised in that** in the participating SMS centre SMSC (13) the short message to be delivered together with a HLR address of a home location register HLR (18) containing the necessary destination information determined in the first delivery attempt is temporarily stored.

3. Method according to claim 2, **characterised in that** for subsequent further delivery attempts the destination information contained in the HLR (18) is requested directly from the HLR (18) on the basis of the HLR address stored in the SMSC (13).

4. Method according to claim 3, characterise in that the interrogation of the HLR (18) ensues via SS7 signalling.

5. Arrangement for handling short messages when there is call number portability among a plurality of telecommunications networks (12; 16; 20), wherein the subscriber numbers allow no unique assignment of subscribers to an individual telecommunications network and wherein in the delivery of the short messages a plurality of delivery attempts is possible using means for determining parameters or data containing at least destination information needed for delivery of the short message at the first delivery attempt, **characterised by** a memory or memory part in a participating SMS centre SMSC (14) for recording all or parts of the parameters or data containing at least the destination information belonging to the first delivery attempt to which a temporary memory is assigned for recording the short message to be delivered, wherein the stored parameters or data containing at least the destination information are used again at least in part in subsequent further delivery attempts.

## Revendications

1. Procédé pour traiter des messages courts entre plusieurs réseaux de télécommunication (12 ; 16 ; 20) en cas de conservation du numéro, étant précisé que les numéros d'abonné n'autorisent pas d'attribution univoque des abonnés au réseau de télécommunication individuel et que lors de la délivrance des messages courts, plusieurs tentatives de délivrance sont possibles, et étant précisé que lors de la première tentative de délivrance sont déterminés les paramètres ou données nécessaires pour délivrer le message court et contenant au moins des informations de destination,
**caractérisé en ce que** les paramètres ou les données contenant au moins les informations de destination qui sont utilisés pour la première tentative de délivrance sont stockés dans leur totalité ou en partie avec le message court à délivrer, dans un central SMS ou SMSC (13) impliqué et sont réutilisés au moins partiellement lors d'autres tentatives de délivrance suivantes.

2. Procédé selon la revendication 1, **caractérisé en ce que** le message court à délivrer est stocké temporairement dans le SMSC (13) impliqué, avec une adresse HLR, déterminée lors de la première tentative de délivrance, d'un enregistreur de localisation nominal HLR (18) qui contient les informations de destination nécessaires.

3. Procédé selon la revendication 2, **caractérisé en ce que** pour d'autres tentatives de délivrance suivantes, les informations de destination contenues dans l'enregistreur HLR (18) sont interrogées directement à partir de celui-ci à l'aide de l'adresse HLR stockée dans le SMSC (13).

4. Procédé selon la revendication 3, **caractérisé en ce que** l'interrogation de l'enregistreur HLR (18) se fait par l'intermédiaire d'une signalisation SS7.

5. Dispositif pour traiter des messages courts entre plusieurs réseaux de télécommunication (12 ; 16 ; 20) en cas de conservation du numéro, étant précisé que les numéros d'abonné n'autorisent pas d'attribution univoque des abonnés au réseau de télécommunication individuel et que lors de la délivrance des messages courts, plusieurs tentatives de délivrance sont possibles à l'aide de moyens pour déterminer des paramètres ou des données nécessaires pour délivrer le message court et contenant au moins des informations de destination, lors de la première tentative de délivrance,
**caractérisé par** une mémoire ou un élément de mémoire, dans un SMSC (14) impliqué, pour recevoir tout ou partie des paramètres ou des données qui font partie de la première tentative de délivrance et qui contiennent au moins les informations de destination, une mémoire intermédiaire étant prévue pour recevoir un message court à délivrer, et les paramètres ou données stockés qui contiennent au moins les informations de destination étant réutilisés au moins partiellement lors d'autres tentatives de délivrance suivantes.
